# EUROPÄISCHE PATENTSCHRIFT

(11) **EP 4 170 294 B1**
(45) Veröffentlichungstag und Bekanntmachung des Hinweises auf die Patenterteilung: **18.06.2025**
(21) Anmeldenummer: 22181813.1
(22) Anmeldetag: 29.06.2022
(51) Int. Cl.: G01F 1/60

(54) **MAGNETISCH-INDUKTIVES DURCHFLUSSMESSGERÄT UND VERFAHREN ZUM BETREIBEN EINES SOLCHEN**
MAGNETIC-INDUCTIVE FLOW MEASURING DEVICE AND METHOD FOR OPERATING A MAGNETIC-INDUCTIVE FLOW MEASURING DEVICE
DÉBITMÈTRE MAGNÉTIQUE À INDUCTION ET PROCÉDÉ PERMETTANT DE FAIRE FONCTIONNER UN TEL DÉBITMÈTRE

(30) Priorität: 20.10.2021 DE 102021127230
(43) Veröffentlichungstag der Anmeldung: 26.04.2023
(73) Patentinhaber: Krohne Messtechnik GmbH, 47058 Duisburg (DE)
(72) Erfinder: Brockhaus, Helmut, 46145 Oberhausen (DE); Dabrowski, Markus, 47269 Duisburg (DE); Schwenger, Ulrike, 45359 Essen (DE)
(74) Vertreter: Gesthuysen Patentanwälte

(56) Entgegenhaltungen:
- JP-A- 2014 109 529
- JP-A- H04 128 614
- US-A1- 2015 000 421
- US-A1- 2020 309 579

## Beschreibung

Magneto-induktive Durchflussmesser sind aus dem Stand der Technik bekannt und werden beispielsweise in JPH 04128614A beschrieben.

Die Erfindung zum einen ein magnetisch-induktives Durchflussmessgerät mit einem Messrohr, einer ersten Elektrode, einer zweiten Elektrode, einem Magnetfeldgenerator, einem Impedanzsignalgenerator, einer Kopplungseinrichtung und einer Steuereinrichtung.

Die erste Elektrode und die zweite Elektrode sind am Messrohr zum unmittelbaren Kontakt mit einem Medium im Messrohr angeordnet. Im Betrieb des magnetisch-induktiven Durchflussmessgeräts ist ein Medium im Messrohr und sind dann auch die erste und die zweite Elektrode im unmittelbaren Kontakt mit dem Medium.

Der Magnetfeldgenerator ist zur Erzeugung eines Wechselmagnetfelds mit einer positiven Magnetfeldphase und einer negativen Magnetfeldphase im Medium im Messrohr ausgebildet. Der Impedanzsignalgenerator ist zur Erzeugung von Anregungssignalen ausgebildet.

Die Kopplungseinrichtung weist einen ersten Kondenator, einen zweiten Kodensator, einen ersten Signalpfad und einen zweiten Signalpfad auf. Der erste Signalpfad verbindet den Impedanzsignalgenerator und die erste Elektrode und der zweite Signalpfad verbindet den Impedanzsignalgenerator und die zweite Elektrode zur Übertragung der Anregungssignale miteinander.

Die Steuereinrichtung ist zur Bestimmung eines Durchflusses eines Mediumgs durch das Messrohr unter Verwendung von vom Wechselmagnetfeld im Medium induzierten und an der ersten Elektrode und der zweiten Elektrode messbaren Durchflussmesssignale ausgebildet. Weiter ist die Steuereinrichtung zur Bestimmung einer Impedanz des Mediums im Messrohr unter Verwendung von durch die Anregungssignale bewirkten und an der ersten Elektrode und der zweiten Elektrode messbaren Impedanzmesssignalen ausgebildet.

Die Erfindung betrifft zum anderen auch ein Verfahren zum Betreiben eines magnetisch-induktiven Durchflussmessgeräts. Das magnetisch-induktive Durchflussmessgerät weist ein Messrohr, eine erste Elektrode, eine zweite Elektrode, einen Magnetfeldgenerator, einen Impedanzsignalgenerator, eine Kopplungseinrichtung und eine Steuereinrichtung auf.

Die erste Elektrode und die zweite Elektrode sind am Messrohr zum unmittelbaren Kontakt mit einem Medium im Messrohr angeordnet.

Die Kopplungseinrichtung weist einen ersten Kondensator, einen zweiten Kondensator, einen ersten Signalpfad und einen zweiten Signalpfad auf.

Der erste Signalpfad verbindet den Impedanzsignalgenerator und die erste Elektrode und der zweite Signalpfad verbindet den Impedanzsignalgenerator und die zweite Elektrode miteinander.

Von dem Magnetfeldgenerator wird ein Wechselmagnetfeld mit einer positiven Magnetfeldphase und einer negativen Magnetfeldphase im Medium im Messrohr erzeugt.

Von der Steuereinrichtung wird ein Durchfluss des Mediums durch das Messrohr unter Verwendung von vom Wechselmagnetfeldmedium induzierten und an der ersten Elektrode und der zweiten Elektrode gemessenen Durchflussmesssignalen bestimmt.

Von dem Impedanzsignalgenerator werden Anregungssignale erzeugt. Die Anregungssignale werden ausgehend vom Impedanzsignalgenerator über den ersten Signalpfad zur ersten Elektrode und über den zweiten Signalpfad zur zweiten Elektrode übertragen.

Von der Steuereinrichtung wird eine Impedanz des Mediums im Messrohr unter Verwendung von durch die Anregungssignale bewirkten und an der ersten Elektrode und der zweiten Elektrode gemessenen Impedanzmesssignalen bestimmt.

Wenn die ersten und die zweite Elektrode in unmittelbarem Kontakt mit einem Medium sind, dann sind sie in galvanischem Kontakt mit dem Medium.

Im Betrieb des magnetisch-induktiven Durchflussmessgeräts erzeugt der Impedanzsignalgenerator die Anregungssignale. Die Anregungssignale werden sowohl vom ersten Signalpfad zur ersten Elektrode als auch vom zweiten Signalpfad zur zweiten Elektrode geführt. Im ersten Signalpfad liegt der erste Kondensator und im zweiten Signalpfad liegt der zweite Kondensator. Der erste und zweite Kondensator trennen zum einen einerseits den Impedanzsignalgenerator und andererseits die erste und zweite Elektrode galvanisch voneinander und gewährleisten zum anderen eine Übertragung der vom Impedanzsignalgenerator erzeugten Anregungssignale zur ersten und zweiten Elektrode. In diesem Sinne sind der erste und zweite Kondensator Koppelkondensatoren.

Im Betrieb des magnetisch-induktiven Durchflussmessgeräts erzeugt der Magnetfeldgenerator das Wechselmagnetfeld und bestimmt die Steuereinrichtung den Durchfluss des Mediums durch das Messrohr unter Verwendung von den vom Wechselmagnetfeld im Medium induzierten und an der ersten und zweiten Elektrode gemessenen Durchflussmesssignalen. Somit umfassen die Durchflussmesssignale solche, welche bei der positiven Magnetfeldphase und solche, welche bei der negativen Magnetfeldphase gemessen worden sind. Das hat den Vorteil, dass eine Wirkung von Störungen und parasitären Effekten zumindest reduziert wird und die Bestimmung des Durchflusses genauer ist.

Es ist erkannt worden, dass bei der Kopplungseinrichtung eine Rückwirkung von der Bestimmung der Impedanz des Mediums auf die Bestimmung des Durchflusses des Mediums auftritt, welche eine Genauigkeit der Bestimmung des Durchflusses beeinträchtigt. Die Kopplung ergibt sich dadurch, dass der erste und zweite Kondensator durch die vom Wechselmagnetfeld im Medium induzierten und an der ersten und zweiten Elektrode anliegenden Durchflussmesssignale umgeladen werden. Die Rückwirkung bleibt auch dann aufgrund von parasitären Doppelschichtkapazitäten zwischen der ersten und zweiten Elektrode und dem Medium erhalten, wenn der erste und zweite Signalpfad jeweils durch einen Schalter aufgetrennt werden. Eine Möglichkeit, die Rückwirkung zu reduzieren, ist eine Reduktion einer Amplitude der Anregungssignale. Dadurch nimmt jedoch auch eine Genauigkeit der Bestimmung der Impedanz des Mediums ab.

Aufgabe der vorliegenden Erfindung ist daher die Angabe eines magnetisch-induktiven Durchflussmessgeräts und eines Verfahrens zum Betreiben eines magnetisch-induktiven Durchflussmessgeräts, bei welchen die Rückwirkung reduziert ist. Vorzugsweise wird eine Genauigkeit der Bestimmung der Impedanz und eine Genauigkeit der Bestimmung des Durchflusses des Mediums nicht beeinträchtigt.

Die Aufgabe wird durch ein magnetisch-induktives Durchflussmessgerät mit den Merkmalen von Anspruch 1 gelöst.

Das magnetisch-induktive Durchflussmessgerät ist dadurch gekennzeichnet, dass die Kopplungseinrichtung einen dritten Kondensator, einen vierten Kondensator, einen ersten Schalter und einen zweiten Schalter aufweist.

Der erste Schalter, der erste Kondensator und der dritte Kondensator sind derart miteinander verbunden und der erste Schalter ist derart ausgebildet, sodass in einem ersten Schaltzustand des ersten Schalters nur der erste Kondensator und in einem zweiten Schaltzustand des ersten Schalters nur der dritte Kondensator in den ersten Signalpfad geschaltet ist. Demnach bewirkt der erste Schalter im Betrieb des magnetisch-induktiven Durchflussmessgeräts, dass entweder nur der erste Kondensator oder nur der dritte Kondensator in den ersten Signalpfad geschaltet ist. Weiter sind der zweite Schalter, der zweite Kondensator und der vierte Kondensator derart miteinander verbunden und ist der zweite Schalter derart ausgebildet, sodass in einem ersten Schaltzustand des zweiten Schalters nur der zweite Kondensator und in einem zweiten Schaltzustand des zweiten Schalters nur der vierte Kondensator in den zweiten Signalpfad geschaltet ist. Demnach bewirkt der zweite Schalter im Betrieb des magnetisch-induktiven Durchflussmessgeräts, dass entweder nur der zweite Kondensator oder nur der vierte Kondensator in den zweiten Signalpfad geschaltet ist. Vorzugsweise weisen der erste und zweite Schalter jeweils nur die beiden Schaltzustände auf.

Weiter ist die Steuereinrichtung ausgebildet, den ersten Schalter und den zweiten Schalter für eine Dauer der positiven Magnetfeldphase in den ersten Schaltzustand und für eine Dauer der negativen Magnetfeldphase in den zweiten Schaltzustand zu versetzen.

Dadurch wird verhindert, dass der erste, zweite, dritte und vierte Kondensator durch von dem Wechselmagnetfeld im Medium induzierten und an der ersten und zweiten Elektrode anliegenden Durchflussmesssignalen umgeladen werden. Dadurch ist die Rückwirkung jedenfalls verringert.

Der Impedanzsignalgenerator ist vorzugsweise ausgebildet, die Anregungssignale auf bestimmte Weisen zu erzeugen, insbesondere als Stromsignale. Die Anregungssignale haben vorzugsweise einen rechteckigen Verlauf über der Zeit. Die Anregungssignale werden vorzugsweise einerseits über den ersten Signalpfad und die erste Elektrode und andererseits über den zweiten Signalpfad und die zweite Elektrode in das Medium eingeprägt, wenn das Wechselmagnetfeld noch nicht eingeschwungen ist. Denn wenn das Wechselmagnetfeld noch nicht eingeschwungen ist, dann kann der Durchfluss des Mediums noch nicht mit ausreichender Genauigkeit bestimmt werden, weshalb die Bestimmung des Durchflusses erst bei eingeschwungenem Wechselmagnetfeld erfolgt. Dadurch sind die Bestimmung des Durchflusses des Mediums und die Bestimmung der Impedanz des Mediums zeitlich voneinander getrennt. Durch die zeitliche Trennung wird eine gegenseitige Beeinträchtigung verhindert. Zur Bestimmung der Impedanz wird hier auch die Bestimmung einer Leitfähigkeit des Mediums gezählt.

Der erste und zweite Schalter können auf verschiedene Arten umgesetzt sein.

In einer Ausgestaltung des magnetisch-induktiven Durchflussmessgeräts sind der erste und der zweite Schalter jeweils zwei einpolige Einschalter. Einpolige Einschalter werden auch als Single Pole, Single Throw bezeichnet und mit SPST abgekürzt. In einer anderen Ausgestaltung sind der erste und zweite Schalter jeweils ein einpoliger Wechselschalter. Ein einpoliger Wechselschalter wird auch als Single Pole Double Throw bezeichnet und mit SPDT abgekürzt. Die Umsetzung des ersten und zweiten Schalters durch einpolige Einschalter und einpolige Wechselschalter ist besonders einfach.

Es ist erkannt worden, dass eine Serienstreuung zwischen Schaltern zu einer unterschiedlich großen Injektion von Ladungsträgern beim Schalten der Schalter führt, wodurch eine Rückwirkung der Bestimmung der Impedanz des Mediums auf die Bestimmung des Durchflusses des Mediums auftritt, welche eine Genauigkeit der Bestimmung des Durchflusses beeinträchtigt. Deshalb sind in einer weiteren Ausgestaltung der erste und der zweite Schalter mit einem Multiplexer realisiert. Durch die Verwendung eines Multiplexers ist ein Unterschied zwischen der Ladung, die der erste Schalter, und der Ladung, die der zweite Schalter, induziert, reduziert, wodurch auch die Rückwirkung reduziert ist.

In einer weiteren Ausgestaltung sind der erste und der zweite Schalter Halbleiterschalter. Insbesondere sind der erste und zweite Schalter auf demselben Die realisiert. In einer besonders bevorzugten Ausgestaltung ist der Multiplexer mit Halbleiterschaltern realisiert.

In einer weiteren Ausgestaltung sind der erste und zweite Schalter in demselben Gehäuse angeordnet. Durch die Anordnung in dem selben Gehäuse wird erreicht, dass der erste und zweite Schalter in dem selben Gehäuse angeordnet. Durch die Anordnung in dem selben Gehäuse wird erreicht, dass der erste und zweite Schalter den gleichen Umgebungsbedingungen ausgesetzt sind und insbesondere eine gleiche Temperatur aufweisen.

In einer weiteren Ausgestaltung des magnetisch-induktiven Durchflussmessgeräts liegt der erste Schalter zwischen einerseits dem ersten und dritten Kondensator und andererseits dem Impedanzsignalgenerator und liegt der zweite Schalter zwischen einerseits dem zweiten und vierten Kondensator und andererseits dem Impedanzsignalgenerator.

In einer weiteren Ausgestaltung ist die Steuereinrichtung ausgebildet, die Durchflussmesssignale und/oder die Impedanzmesssignale als Spannungen zwischen der ersten und zweiten Elektrode zu messen.

In einer weiteren Ausgestaltung ist das Wechselmagnetfeld ein pulsierendes Gleichmagnetfeld. Das pulsierende Gleichmagnetfeld weist über der Zeit alternierend eine erste Magnetfeldrichtung und eine zur ersten antiparallele zweite Magnetfeldrichtung auf. Dabei ist ein Betrag einer Magnetfeldstärke in einem eingeschwungenen Zustand bei beiden Magnetfeldrichtungen konstant.

Die Aufgabe ist auch durch ein Verfahren zum Betreiben eines magnetisch-induktiven Durchflussmessgeräts mit den Merkmalen von Anspruch 10 gelöst.

Die Kopplungseinrichtung des magnetisch-induktiven Durchflussmessgeräts, welches dieses Verfahren ausführt, weist zusätzlich einen dritten Kondensator, einen vierten Kondensator, einen ersten Schalter und einen zweiten Schalter auf.

Das zuvor beschriebene Verfahren ist wie folgt modifiziert:
Von der Steuereinrichtung werden der erste Schalter und der zweite Schalter für eine Dauer der positiven Magnetfeldphase in einen ersten Zustand versetzt, sodass nur der erste Kondensator in den ersten Signalpfad geschaltet ist und nur der zweite Kondensator in den zweiten Signalpfad geschaltet ist.

Weiter werden von der Steuereinrichtung der erste Schalter und der zweite Schalter für eine Dauer der negativen Magnetfeldphase in einen zweiten Zustand versetzt, sodass nur der dritte Kondensator in den ersten Signalpfad geschaltet ist und nur der vierte Kondensator in den zweiten Signalpfad geschaltet ist.

In einer Ausgestaltung ist das magnetisch-induktive Durchflussmessgerät, welches das Verfahren ausführt, gemäß zumindest einer der zuvor beschriebenen Ausgestaltungen ausgebildet.

Im Übrigen gelten die Ausführungen zu dem magnetisch-induktiven Durchflussmessgerät entsprechend für das Verfahren zum Betreiben eines magnetisch-induktiven Durchflussmessgeräts und umgekehrt.

Im Einzelnen ist eine Vielzahl von Möglichkeiten gegeben, das magnetisch-induktive Durchflussmessgerät und das Verfahren auszugestalten und weiterzubilden. Dazu wird verwiesen sowohl auf die, den unabhängigen Ansprüchen nachgeordnete Ansprüche als auch auf die nachfolgende Beschreibung eines bevorzugten Ausführungsbeispiels in Verbindung mit der Zeichnung.

In der Zeichnung zeigt
Fig. 1 ein Ausführungsbeispiel eines magnetisch-induktiven Durchflussmessgeräts und
Fig. 2 einen zeitlichen Verlauf von Signalen im Betrieb des magnetisch-induktiven Durchflussmessgeräts.

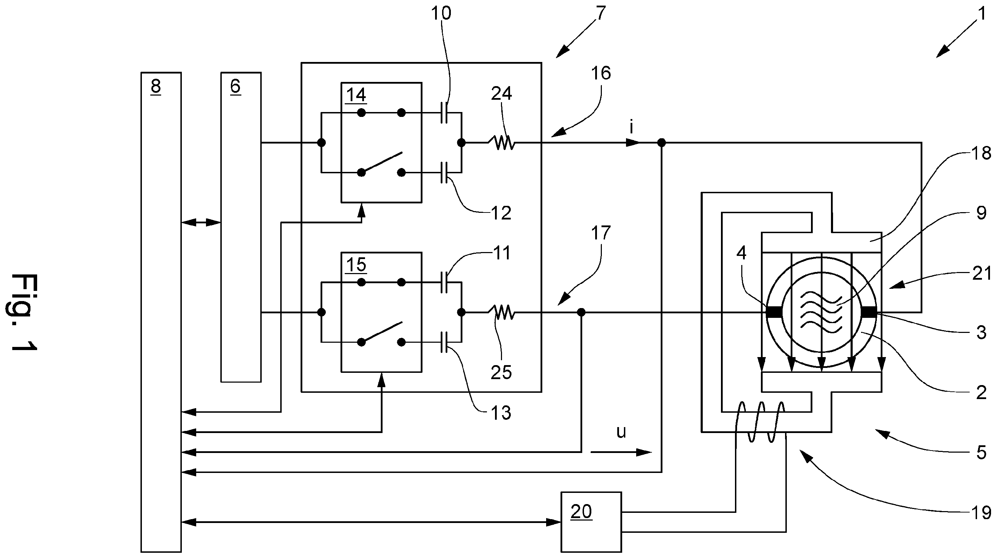

Fig. 1 zeigt wesentliche Elemente eines Ausführungsbeispiels eines magnetisch-induktiven Durchflussmessgeräts 1 abstrahiert und im Betrieb. Das magnetisch-induktive Durchflussmessgerät 1 weist ein Messrohr 2, eine erste Elektrode 3, eine zweite Elektrode 4, einen Magnetfeldgenerator 5, einen Impedanzsignalgenerator 6, eine Kopplungseinrichtung 7 und eine Steuereinrichtung 8 auf.

Da das magnetisch-induktive Durchflussmessgerät 1 im Betrieb ist, wird ein Medium 9 durch das Messrohr 2 geströmt. Die erste Elektrode 3 und die zweite Elektrode 4 sind am Messrohr zum unmittelbaren Kontakt mit dem Medium 9 am Messrohr 2 angeordnet. Vorliegend sind die erste Elektrode 3 und die zweite Elektrode 4 in unmittelbarem Kontakt mit dem Medium 9.

Die Kopplungseinrichtung 7 weist einen ersten Kondensator 10, einen zweiten Kondensator 11, einen dritten Kondensator 12, einen vierten Kondensator 13, einen ersten Schalter 14, einen zweiten Schalter 15, einen ersten Signalpfad 16 und einen zweiten Signalpfad 17.

Der erste Signalpfad 16 verbindet den Impedanzsignalgenerator 6 und die erste Elektrode 3 miteinander und der zweite Signalpfad 17 verbindet den Impedanzsignalgenerator 6 und die zweite Elektrode 4 miteinander.

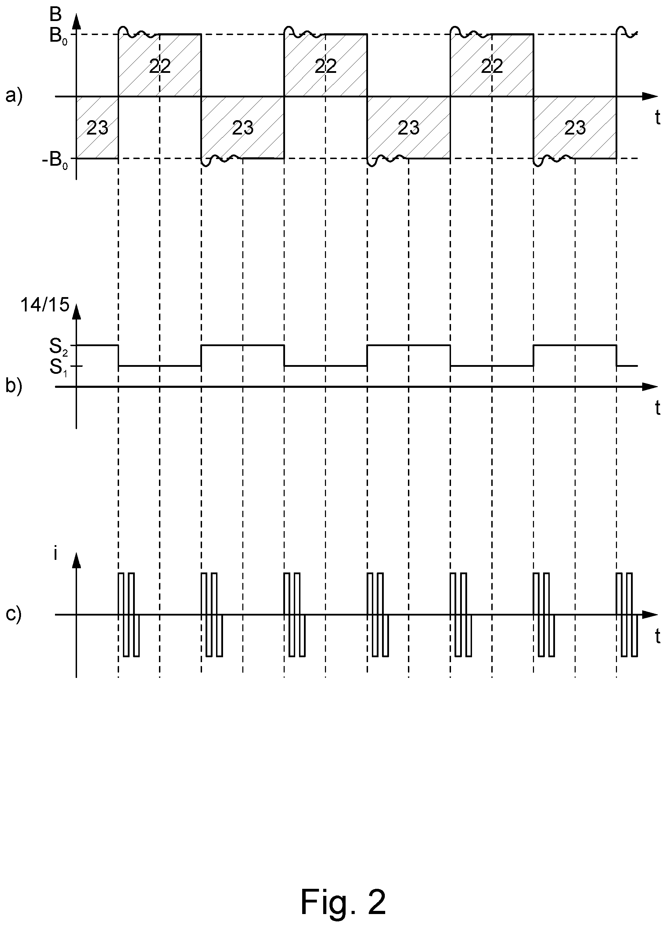

Der Magnetfeldgenerator 5 weist ein Joch 18, eine Spule 19 und eine Quelle 20 auf. Die Quelle 20 ist durch die Steuereinrichtung 8 steuerbar und speist die Spule 19. Der Magnetfeldgenerator 5 ist zur Erzeugung eines Wechselmagnetfelds 21 mit einer positiven Magnetfeldphase 22 und einer negativen Magnetfeldphase 23 im Medium 9 im Messrohr 2 ausgebildet. Das Wechselmagnetfeld ist im vorliegenden Ausführungsbeispiel ein pulsierendes Gleichmagnetfeld. Das pulsierende Gleichmagnetfeld weist über der Zeit alternierend eine erste Magnetfeldrichtung und eine zur ersten antiparallelen zweite Magnetfeldrichtung auf. Ein Betrag B₀ einer magnetischen Flussdichte B in einem eingeschwungenen Zustand ist bei beiden Magnetfeldrichtungen konstant. Siehe Fig. 2a.

Die Steuereinrichtung 8 ist zur Bestimmung eines Durchflusses des Mediums 9 durch das Messrohr 2 unter Verwendung von vom Wechselmagnetfeld 21 im Medium induzierten und an der ersten Elektrode 3 und der zweiten Elektrode 4 messbaren Durchflussmesssignalen ausgebildet. In diesem Ausführungsbeispiel ist die Steuereinrichtung 8 ausgebildet, die Durchflussmesssignale als Spannungen u zwischen der ersten Elektrode 3 und der zweiten Elektrode 4 zu messen.

Der Impedanzsignalgenerator 6 ist zur Erzeugung von Anregungssignalen ausgebildet. In diesem Ausführungsbeispiel sind die Anregungssignale Stromsignale i, siehe Fig. 2c, die zum einen über den ersten Signalpfad 16 und die erste Elektrode 3 und zum anderen über den zweiten Signalpfad 17 und die zweite Elektrode 4 in das Medium 9 eingeprägt werden.

Weiter ist die Steuereinrichtung 8 zur Bestimmung einer Impedanz des Mediums 9 im Messrohr 2 unter Verwendung von durch die Anregungssignale i bewirkten und an der ersten Elektrode 3 und der zweiten Elektrode 4 messbaren Impedanzmesssignalen ausgebildet. Die Steuereinrichtung 8 ist in diesem Ausführungsbeispiel ausgebildet, die Impedanzmesssignale als Spannungen u zwischen der ersten Elektrode 3 und der zweiten Elektrode 4 zu messen.

Der erste Schalter 14 und der zweite Schalter 15 sind im vorliegenden Ausführungsbeispiel durch jeweils einen Multiplexer realisiert. Die Multiplexer sind Halbleiterschalter, die auf demselben Die realisiert sind. Auch sind der erste Schalter 14 und der zweite Schalter 15 in demselben Gehäuse angeordnet.

Der erste Schalter 14 ist zwischen einerseits dem ersten Kondensator 10 und dem dritten Kondensator 12 und andererseits dem Impedanzsignalgenerator 6 angeordnet. Der zweite Schalter 15 ist zwischen einerseits dem zweiten Kondensator 11 und dem vierten Kondensator 13 und andererseits dem Impedanzsignalgenerator 6 angeordnet. Weiter ist im ersten Signalpfad 16 zwischen einerseits dem ersten Kondensator 10 und dem zweiten Kondensator 12 und andererseits der ersten Elektrode 3 ein Widerstand 24 angeordnet. Entsprechend ist im zweiten Signalpfad 17 zwischen einerseits dem zweiten Kondensator 11 und dem vierten Kondensator 13 und andererseits der zweiten Elektrode 4 ein zweiter Widerstand 25 angeordnet. Der erste Widerstand 24 und der zweite Widerstand 25 dienen einer Begrenzung des Stroms i.

Der erste Schalter 14, der erste Kondensator 10 und der dritte Kondensator 12 sind derart miteinander verbunden und der erste Schalter 14 ist derart ausgebildet, sodass in einem ersten Schaltzustand S₁ nur der erste Kondensator 10 und in einem zweiten Schaltzustand S₂ nur der dritte Kondensator 12 in den ersten Signalpfad 16 geschaltet ist. Der zweite Schalter 15, der zweite Kondensator 11 und der vierte Kondensator 13 sind derart miteinander verbunden und der zweite Schalter 15 ist derart ausgebildet, sodass in einem ersten Schaltzustand S₁ nur der zweite Kondensator 11 und in einem zweiten Zustand S₂ nur der vierte Kondensator 13 in den zweiten Signalpfad 17 geschaltet ist. In Fig. 1 sind der erste Schalter 14 und der zweite Schalter 15 jeweils im ersten Schaltzustand S₁ dargestellt.

Die Steuereinrichtung 8 ist ausgebildet, den ersten Schalter 14 und den zweiten Schalter 15 für eine Dauer der positiven Magnetfeldphase 22 in den ersten Schaltzustand S₁ und für die Dauer der negativen Magnetfeldphase 23 in den zweiten Schaltzustand S₂ zu versetzen.

Im Betrieb führt das magnetisch-induktive Durchflussmessgerät 1 das folgende Verfahren aus:
Von dem Magnetfeldgenerator 5 wird das Wechselmagnetfeld 21 mit der positiven Magnetfeldphase 22 und der negativen Magnetfeldphase 23 im Medium 9 im Messrohr 2 erzeugt.

Von der Steuereinrichtung 8 wird ein Durchfluss des Mediums 9 durch das Messrohr 2 unter Verwendung von vom Wechselmagnetfeld 21 im Medium 9 induzierten und an der ersten Elektrode 3 und der zweiten Elektrode 4 gemessenen Spannungen u als Durchflussmesssignale bestimmt.

Von dem Impedanzsignalgenerator 6 werden die Anregungssignale erzeugt. Die Anregungssignale werden dann in das Medium 9 eingeprägt, wenn das Wechselmagnetfeld 21 noch nicht eingeschwungen ist. Dadurch sind die Bestimmungen des Durchflusses des Mediums 9 und die Bestimmung der Leitfähigkeit des Mediums 9 zeitlich voneinander getrennt.

Von der Steuereinrichtung 8 werden der erste Schalter 14 und der zweite Schalter 15 für die Dauer der positiven Magnetfeldphase 22 in den ersten Zustand S₁ versetzt, sodass nur der erste Kondensator 10 in den ersten Signalpfad 16 und nur der zweite Kondensator 11 in den zweiten Signalpfad 17 geschaltet ist.

Weiter werden von der Steuereinrichtung 8 der erste Schalter 14 und der zweite Schalter 15 für die Dauer der negativen Magnetfeldphase 23 in den zweiten Zustand S₂ versetzt, sodass nur der dritte Kondensator 12 in den ersten Signalpfad 16 und nur der vierte Kondensator 13 in den zweiten Signalpfad 17 geschaltet ist.

Weiter wird von der Steuereinrichtung eine Leitfähigkeit des Mediums 9 im Messrohr unter Verwendung von durch die Anregungssignale i bewirkten und an der ersten Elektrode 3 und an der zweiten Elektrode 4 gemessenen Spannungen u als Impedanzmesssignale bestimmt.

### Bezugszeichen

- 1: magnetisch-induktives Durchflussmessgerät
- 2: Messrohr
- 3: erste Elektrode
- 4: zweite Elektrode
- 5: Magnetfeldgenerator
- 6: Impedanzsignalgenerator
- 7: Kopplungseinrichtung
- 8: Steuereinrichtung
- 9: Medium
- 10: erster Kondensator
- 11: zweiter Kondensator
- 12: dritter Kondensator
- 13: vierter Kondensator
- 14: erster Schalter
- 15: zweiter Schalter
- 16: erster Signalpfad
- 17: zweiter Signalpfad
- 18: Joch
- 19: Spule
- 20: Quelle
- 21: Wechselmagnetfeld
- 22: positive Magnetfeldphase
- 23: negative Magnetfeldphase
- 24: erster Widerstand
- 25: zweiter Widerstand
- B: magnetische Flussdichte
- B₀: Betrag der magnetischen Flussdichte im eingeschwungenen Zustand
- i: Strom
- u: Spannung

## Patentansprüche

1. Magnetisch-induktives Durchflussmessgerät (1) mit einem Messrohr (2), einer ersten Elektrode (3), einer zweiten Elektrode (4), einem Magnetfeldgenerator (5), einem Impedanzsignalgenerator (6), einer Kopplungseinrichtung (7) und einer Steuereinrichtung (8),
wobei die erste Elektrode (3) und die zweite Elektrode (4) am Messrohr (2) zum unmittelbaren Kontakt mit einem Medium (9) im Messrohr (2) angeordnet sind,
wobei der Magnetfeldgenerator (5) zur Erzeugung eines Wechselmagnetfelds (21) mit einer positiven Magnetfeldphase (22) und einer negativen Magnetfeldphase (23) im Medium (9) im Messrohr (2) ausgebildet ist,
wobei der Impedanzsignalgenerator (6) zur Erzeugung von Anregungssignalen (i) ausgebildet ist,
wobei die Kopplungseinrichtung (7) einen ersten Kondensator (10), einen zweiten (12) Kondensator, einen ersten Signalpfad (16) und einen zweiten Signalpfad (17) aufweist,
wobei der erste Signalpfad (16) den Impedanzsignalgenerator (6) und die erste Elektrode (3) und der zweite Signalpfad (17) den Impedanzsignalgenerator (6) und die zweite Elektrode (4) zur Übertragung der Anregungssignale (i) miteinander verbindet,
wobei die Steuereinrichtung (8) zur Bestimmung eines Durchflusses eines Mediums (9) durch das Messrohr (2) unter Verwendung von vom Wechselmagnetfeld (21) im Medium (9) induzierten und an der ersten Elektrode (3) und der zweiten Elektrode (4) messbaren Durchflussmesssignalen ausgebildet ist und
wobei die Steuereinrichtung (8) zur Bestimmung einer Impedanz des Mediums (9) im Messrohr (2) unter Verwendung von durch die Anregungssignale (i) bewirkten und an der ersten Elektrode (3) und der zweiten Elektrode (4) messbaren Impedanzmesssignalen ausgebildet ist,
**dadurch gekennzeichnet,**
**dass** die Kopplungseinrichtung (7) einen dritten Kondensator (12), einen vierten Kondensator (13), einen ersten Schalter (14) und einen zweiten Schalter (15) aufweist,
**dass** der erste Schalter (14), der erste Kondensator (10) und der dritte Kondensator (12) derart miteinander verbunden sind und der erste Schalter (14) derart ausgebildet ist, sodass in einem ersten Schaltzustand (S₁) nur der erste Kondensator (10) und in einem zweiten Schaltzustand (S₂) nur der dritte Kondensator (12) in den ersten Signalpfad (16) geschaltet ist,
**dass** der zweite Schalter (15), der zweite Kondensator (11) und der vierte Kondensator (13) derart miteinander verbunden sind und der zweite Schalter (15) derart ausgebildet ist, sodass in einem ersten Schaltzustand (S₁) nur der zweite Kondensator (11) und in einem zweiten Schaltzustand (S₂) nur der vierte Kondensator (13) in den zweiten Signalpfad (17) geschaltet ist und
**dass** die Steuereinrichtung (8) ausgebildet ist, den ersten Schalter (14) und den zweiten Schalter (15) für eine Dauer der positiven Magnetfeldphase (22) in den ersten Schaltzustand (S₁) und für eine Dauer der negativen Magnetfeldphase (23) in den zweiten Schaltzustand (S₂) zu versetzen.

2. Magnetisch-induktives Durchflussmessgerät (1) nach Anspruch 1, **dadurch gekennzeichnet, dass** der erste Schalter (14) und der zweite Schalter (15) jeweils zwei einpolige Einschalter sind.

3. Magnetisch-induktives Durchflussmessgerät (1) nach Anspruch 1, **dadurch gekennzeichnet, dass** der erste Schalter (14) und der zweite Schalter (15) jeweils ein einpoliger Wechselschalter ist.

4. Magnetisch-induktives Durchflussmessgerät (1) nach einem der Ansprüche 1 bis 3, **dadurch gekennzeichnet, dass** der erste Schalter (14) und der zweite Schalter (15) mit einem Multiplexer realisiert sind.

5. Magnetisch-induktives Durchflussmessgerät (1) nach einem der Ansprüche 1 bis 4, **dadurch gekennzeichnet, dass** der erste Schalter (14) und der zweite Schalter (15) Halbleiterschalter sind, insbesondere auf demselben Die realisiert sind.

6. Magnetisch-induktives Durchflussmessgerät (1) nach einem der Ansprüche 1 bis 5, **dadurch gekennzeichnet, dass** der erste Schalter (14) und der zweite Schalter (15) in demselben Gehäuse angeordnet sind.

7. Magnetisch-induktives Durchflussmessgerät (1) nach einem der Ansprüche 1 bis 6, **dadurch gekennzeichnet, dass** der erste Schalter (14) zwischen einerseits dem ersten Kondensator (10) und dem dritten Kondensator (12) und andererseits dem Impedanzsignalgenerator (6) liegt und dass der zweite Schalter (15) zwischen einerseits dem zweiten Kondensator (11) und dem vierten Kondensator (13) und andererseits dem Impedanzsignalgenerator (6) liegt.

8. Magnetisch-induktives Durchflussmessgerät (1) nach einem der Ansprüche 1 bis 7, **dadurch gekennzeichnet, dass** die Steuereinrichtung (8) ausgebildet ist, die Durchflussmesssignale und/oder die Impedanzmesssignale als Spannungen (u) zwischen der ersten Elektrode (3) und der zweiten Elektrode (4) zu messen.

9. Magnetisch-induktives Durchflussmessgerät (1) nach einem der Ansprüche 1 bis 8, **dadurch gekennzeichnet, dass** das Wechselmagnetfeld (21) ein pulsierendes Gleichmagnetfeld ist.

10. Verfahren zum Betreiben eines magnetisch-induktiven Durchflussmessgeräts (1) mit einem Messrohr (2), einer ersten Elektrode (3), einer zweiten Elektrode (4), einem Magnetfeldgenerator (5), einem Impedanzsignalgenerator (6), einer Kopplungseinrichtung (7) und einer Steuereinrichtung (8),
wobei die erste Elektrode (3) und die zweite Elektrode (4) am Messrohr (2) zum unmittelbaren Kontakt mit einem Medium (9) im Messrohr (2) angeordnet sind,
wobei die Kopplungseinrichtung (7) einen ersten Kondensator (10), einen zweiten Kondensator (11), einen dritten Kondensator (12), einen vierten Kondensator (13), einen ersten Schalter (14), einen zweiten Schalter (15), einen ersten Signalpfad (16) und einen zweiten Signalpfad (17) aufweist,
wobei der erste Signalpfad (16) den Impedanzsignalgenerator (6) und die erste Elektrode (3) und der zweite Signalpfad (17) den Impedanzsignalgenerator (6) und die zweite Elektrode (4) miteinander verbindet,
wobei von dem Magnetfeldgenerator (5) ein Wechselmagnetfeld (21) mit einer positiven Magnetfeldphase (22) und einer negativen Magnetfeldphase (23) im Medium (9) im Messrohr (2) erzeugt wird,
wobei von der Steuereinrichtung (8) ein Durchfluss des Mediums (9) durch das Messrohr (2) unter Verwendung von vom Wechselmagnetfeld (21) im Medium (9) induzierten und an der ersten Elektrode (3) und der zweiten Elektrode (4) gemessenen Durchflussmesssignalen bestimmt wird,
wobei von dem Impedanzsignalgenerator (6) Anregungssignale erzeugt werden,
wobei die Anregungssignale vom Impedanzsignalgenerator (6) über den ersten Signalpfad (16) zur ersten Elektrode (3) und über den zweiten Signalpfad (17) zur zweiten Elektrode (4) übertragen werden,
wobei von der Steuereinrichtung (8) der erste Schalter (14) und der zweite Schalter (15) für eine Dauer der positiven Magnetfeldphase (22) in einen ersten Zustand (S₁) versetzt werden, sodass nur der erste Kondensator (10) in den ersten Signalpfad (16) geschaltet ist und nur der zweite Kondensator (11) in den zweiten Signalpfad (17) geschaltet ist,
wobei von der Steuereinrichtung (8) der erste Schalter (14) und der zweite Schalter (15) für eine Dauer der negativen Magnetfeldphase (23) in einen zweiten Zustand (S₂) versetzt werden, sodass nur der dritte Kondensator (12) in den ersten Signalpfad (16) geschaltet ist und nur der vierte Kondensator (13) in den zweiten Signalpfad (17) geschaltet ist und
wobei von der Steuereinrichtung (8) eine Impedanz des Mediums (9) im Messrohr (2) unter Verwendung von durch die Anregungssignale bewirkten und an der ersten Elektrode (3) und der zweiten Elektrode (4) gemessenen Impedanzmesssignalen bestimmt wird.

11. Verfahren nach Anspruch 10, wobei das magnetisch-induktive Durchflussmessgerät (1) nach einem der Ansprüche 1 bis 9 ausgebildet ist.

## Claims

1. Magnetic-inductive flowmeter (1) comprising a measuring tube (2), a first electrode (3), a second electrode (4), a magnetic field generator (5), an impedance signal generator (6), a coupling device (7) and a control device (8),
wherein the first electrode (3) and the second electrode (4) are arranged on the measuring tube (2) for direct contact with a medium (9) in the measuring tube (2),
wherein the magnetic field generator (5) is designed to generate an alternating magnetic field (21) with a positive magnetic field phase (22) and a negative magnetic field phase (23) in the medium (9) in the measuring tube (2),
wherein the impedance signal generator (6) is designed to generate excitation signals (i),
wherein the coupling device (7) comprises a first capacitor (10), a second capacitor (12), a first signal path (16) and a second signal path (17),
wherein the first signal path (16) interconnects the impedance signal generator (6) and the first electrode (3) and the second signal path (17) interconnects the impedance signal generator (6) and the second electrode (4) for transmitting the excitation signals (i),
wherein the control device (8) is designed for determining a flow rate of a medium (9) through the measuring tube (2) using flow rate measurement signals caused by the alternating magnetic field (21) in the medium (9) and measurable at the first electrode (3) and the second electrode (4), and
wherein the control device (8) is designed to determine an impedance of the medium (9) in the measuring tube (2) using impedance measurement signals induced by the excitation signals (i) and measurable at the first electrode (3) and the second electrode (4),
**characterized in**
**that** the coupling device (7) has a third capacitor (12), a fourth capacitor (13), a first switch (14) and a second switch (15)
**that** the first switch (14), the first capacitor (10) and the third capacitor (12) are connected to one another in such a way and the first switch (14) is designed in such a way that, in a first switching state (S₁), only the first capacitor (10) and, in a second switching state (S₂), only the third capacitor (12) are connected in the first signal path (16)
**that** the second switch (15), the second capacitor (11) and the fourth capacitor (13) are connected to one another in such a way and the second switch (15) is designed in such a way that, in a first switching state (S₁), only the second capacitor (11) and, in a second switching state (S₂), only the fourth capacitor (13) is connected into the second signal path (17), and
**that** the control device (8) is designed to set the first switch (14) and the second switch (15) to the first switching state (S₁) for a duration of the positive magnetic field phase (22) and to set them to the second switching state (S₂) for a duration of the negative magnetic field phase (23).

2. Magnetic-inductive flowmeter (1) according to claim 1, **characterized in that** the first switch (14) and the second switch (15) are each two single pole single throw switches.

3. Magnetic-inductive flowmeter (1) according to claim 1, **characterized in that** the first switch (14) and the second switch (15) are each a single-pole changeover switch.

4. Magnetic-inductive flowmeter (1) according to any one of claims 1 to 3, **characterized in that** the first switch (14) and the second switch (15) are implemented with a multiplexer.

5. Magnetic-inductive flowmeter (1) according to any one of claims 1 to 4, **characterized in that** the first switch (14) and the second switch (15) are semiconductor switches, in particular implemented on the same die.

6. Magnetic-inductive flowmeter (1) according to any one of claims 1 to 5, **characterized in that** the first switch (14) and the second switch (15) are arranged in the same housing.

7. Magnetic-inductive flowmeter (1) according to any one of claims 1 to 6, **characterized in that** the first switch (14) is located between, on the one hand, the first capacitor (10) and the third capacitor (12) and, on the other hand, the impedance signal generator (6), and that the second switch (15) is located between, on the one hand, the second capacitor (11) and the fourth capacitor (13) and, on the other hand, the impedance signal generator (6).

8. Magnetic-inductive flowmeter (1) according to any one of claims 1 to 7, **characterized in that** the control device (8) is designed to measure the flowmeter signals and/or the impedance measurement signals as voltages (u) between the first electrode (3) and the second electrode (4).

9. Magnetic-inductive flowmeter (1) according to any one of claims 1 to 8, **characterized in that** the alternating magnetic field (21) is a pulsating DC magnetic field.

10. Method for operating a magnetic-inductive flowmeter (1) comprising a measuring tube (2), a first electrode (3), a second electrode (4), a magnetic field generator (5), an impedance signal generator (6), a coupling device (7) and a control device (8),
wherein the first electrode (3) and the second electrode (4) are arranged on the measuring tube (2) for direct contact with a medium (9) in the measuring tube (2),
wherein the coupling device (7) comprises a first capacitor (10), a second capacitor (11), a third capacitor (12), a fourth capacitor (13), a first switch (14), a second switch (15), a first signal path (16) and a second signal path (17),
wherein the first signal path (16) interconnects the impedance signal generator (6) and the first electrode (3) and the second signal path (17) interconnects the impedance signal generator (6) and the second electrode (4),
wherein an alternating magnetic field (21) with a positive magnetic field phase (22) and a negative magnetic field phase (23) is generated in the medium (9) in the measuring tube (2) by the magnetic field generator (5),
wherein a flow rate of the medium (9) through the measuring tube (2) is determined by the control device (8) using flow rate measurement signals induced by the alternating magnetic field (21) in the medium (9) and measured at the first electrode (3) and the second electrode (4),
wherein excitation signals are generated by the impedance signal generator (6),
wherein the excitation signals are transmitted from the impedance signal generator (6) via the first signal path (16) to the first electrode (3) and via the second signal path (17) to the second electrode (4),
wherein the first switch (14) and the second switch (15) are set to a first state (S₁) by the control device (8) for a duration of the positive magnetic field phase (22), so that only the first capacitor (10) is switched into the first signal path (16) and only the second capacitor (11) is switched into the second signal path (17),
wherein the first switch (14) and the second switch (15) are set to a second state (S₂) by the control device (8) for a duration of the negative magnetic field phase (23), so that only the third capacitor (12) is connected in the first signal path (16) and only the fourth capacitor (13) is connected in the second signal path (17), and
wherein an impedance of the medium (9) in the measuring tube (2) is determined by the control device (8) using impedance measurement signals caused by the excitation signals and measured at the first electrode (3) and the second electrode (4).

11. Method according to claim 10, wherein the magnetic-inductive flowmeter (1) is configured according to any one of claims 1 to 9.

## Revendications

1. Débitmètre magnéto-inductif (1) comprenant un tube de mesure (2), une première électrode (3), une deuxième électrode (4), un générateur (5) de champ magnétique, un générateur (6) de signaux d'impédance, un dispositif de liaison (7) et un dispositif de commande (8),
la première électrode (3) et la deuxième électrode (4) étant agencées sur le tube de mesure (2) de façon à être en contact direct avec un milieu (9) présent dans le tube de mesure (2),
le générateur (5) de champ magnétique étant conçu pour générer un champ magnétique alternatif (21) avec une phase de champ magnétique positive (22) et une phase de champ magnétique négative (23) dans le milieu (9) présent dans le tube de mesure (2),
le générateur (6) de signaux d'impédance étant conçu de façon à générer des signaux d'excitation (i),
le dispositif de liaison (7) comprenant un premier condensateur (10), un deuxième condensateur (12), un premier chemin de signal (16) et un deuxième chemin de signal (17),
le premier chemin de signal (16) reliant le générateur (6) de signaux d'impédance et la première électrode (3) et le deuxième chemin de signal (17) reliant le générateur (6) de signaux d'impédance et la deuxième électrode (4) pour la transmission des signaux d'excitation (i),
le dispositif de commande (8) étant conçu de façon à déterminer le débit d'un milieu (9) à travers le tube de mesure (2) en utilisant des signaux de mesure de débit induits par le champ magnétique alternatif (21) dans le milieu (9) et mesurables au niveau de la première électrode (3) et de la deuxième électrode (4), et
le dispositif de commande (8) étant conçu pour déterminer une impédance du milieu (9) dans le tube de mesure (2) en utilisant des signaux de mesure d'impédance générés par les signaux d'excitation (i) et mesurables au niveau de la première électrode (3) et de la deuxième électrode (4),
**caractérisé**
**en ce que** le dispositif de liaison (7) comporte un troisième condensateur (12), un quatrième condensateur (13), un premier commutateur (14) et un deuxième commutateur (15),
**en ce que** le premier commutateur (14), le premier condensateur (10) et le troisième condensateur (12) sont reliés entre eux et que le premier commutateur (14) est conçu de telle sorte que, dans un premier état de commutation (S₁), seul le premier condensateur (10), et dans un deuxième état de commutation (S₂), seul le troisième condensateur (12), est connecté dans le premier chemin de signal (16),
**en ce que** le deuxième commutateur (15), le deuxième condensateur (11) et le quatrième condensateur (13) sont reliés entre eux et le deuxième commutateur (15) est conçu de telle sorte que, dans un premier état de commutation (S₁), seul le deuxième condensateur (11) est connecté au deuxième chemin de signal (17) et que, dans un deuxième état de commutation (S₂), seul le quatrième condensateur (13) est connecté au deuxième chemin de signal (17), et
**en ce que** le dispositif de commande (8) est conçu pour placer le premier commutateur (14) et le deuxième commutateur (15) dans le premier état de commutation (S₁) pendant la durée de la phase positive du champ magnétique (22) et dans le deuxième état de commutation (S₂) pendant la durée de la phase négative du champ magnétique (23).

2. Débitmètre magnéto-inductif (1) selon la revendication 1, **caractérisé en ce que** le premier commutateur (14) et le deuxième commutateur (15) sont respectivement deux commutateurs unipolaires.

3. Débitmètre magnéto-inductif (1) selon la revendication 1, **caractérisé en ce que** le premier commutateur (14) et le deuxième commutateur (15) sont chacun un commutateur unipolaire.

4. Débitmètre magnéto-inductif (1) selon l'une des revendications 1 à 3, **caractérisé en ce que** le premier commutateur (14) et le deuxième commutateur (15) sont réalisés avec un multiplexeur.

5. Débitmètre magnéto-inductif (1) selon l'une des revendications 1 à 4, **caractérisé en ce que** le premier commutateur (14) et le deuxième commutateur (15) sont des commutateurs à semi-conducteurs, en particulier sont réalisés sur le même circuit intégré.

6. Débitmètre magnéto-inductif (1) selon l'une des revendications 1 à 5, **caractérisé en ce que** le premier commutateur (14) et le deuxième commutateur (15) sont agencés dans le même boîtier.

7. Débitmètre magnéto-inductif (1) selon l'une des revendications 1 à 6, **caractérisé en ce que** le premier commutateur (14) se trouve entre, d'une part, le premier condensateur (10) et le troisième condensateur (12), et, d'autre part, le générateur (6) de signaux d'impédance, et **en ce que** le deuxième commutateur (15) se trouve entre, d'une part, le deuxième condensateur (11) et le quatrième condensateur (13) et, d'autre part, le générateur (6) de signaux d'impédance.

8. Débitmètre magnéto-inductif (1) selon l'une des revendications 1 à 7, **caractérisé en ce que** le dispositif de commande (8) est conçu de façon à mesurer les signaux de mesure de débit et/ou les signaux de mesure d'impédance sous forme de tensions (u) entre la première électrode (3) et la deuxième électrode (4).

9. Débitmètre magnéto-inductif (1) selon l'une des revendications 1 à 8, **caractérisé en ce que** le champ magnétique alternatif (21) est un champ magnétique continu pulsé.

10. Procédé pour faire fonctionner un débitmètre magnéto-inductif (1) comprenant un tube de mesure (2), une première électrode (3), une deuxième électrode (4), un générateur (5) de champ magnétique, un générateur (6) de signal d'impédance, un dispositif de liaison (7) et un dispositif de commande (8),
la première électrode (3) et la deuxième électrode (4) étant agencées sur le tube de mesure (2) de façon à être en contact direct avec un milieu (9) présent dans le tube de mesure (2),
le dispositif de liaison (7) comprenant un premier condensateur (10), un deuxième condensateur (11), un troisième condensateur (12), un quatrième condensateur (13), un premier commutateur (14), un deuxième commutateur (15), un premier chemin de signal (16) et un deuxième chemin de signal (17),
le premier chemin de signal (16) reliant le générateur (6) de signaux d'impédance et la première électrode (3), et le deuxième chemin de signal (17) reliant le générateur (6) de signaux d'impédance et la deuxième électrode (4),
un champ magnétique alternatif (21) avec une phase de champ magnétique positive (22) et une phase de champ magnétique négative (23) étant généré par le générateur (5) de champ magnétique dans le milieu (9) présent dans le tube de mesure (2),
le dispositif de commande (8) déterminant le débit du milieu (9) dans le tube de mesure (2) en utilisant des signaux de mesure de débit induits par le champ magnétique alternatif (21) dans le milieu (9) et mesurés au niveau de la première électrode (3) et au niveau de la deuxième électrode (4),
des signaux d'excitation étant générés par le générateur (6) de signaux d'impédance,
les signaux d'excitation étant transmis par le générateur (6) de signaux d'impédance à la première électrode (3) par le premier chemin de signal (16) et à la deuxième électrode (4) par le deuxième chemin de signal (17),
le premier commutateur (14) et le deuxième commutateur (15) étant placés par le dispositif de commande (8) dans un premier état (S₁) pendant la durée de la phase de champ magnétique positif (22), de sorte que seul le premier condensateur (10) est connecté au premier chemin de signal (16), et que seul le deuxième condensateur (11) est connecté dans le deuxième chemin de signal (17),
le premier commutateur (14) et le deuxième commutateur (15) étant placés par le dispositif de commande (8) dans un deuxième état (S₂) pendant la durée de la phase de champ magnétique négatif (23), de sorte que seul le troisième condensateur (12) est connecté au premier chemin de signal (16), et que seul le quatrième condensateur (13) est connecté dans le deuxième chemin de signal (17), et
le dispositif de commande (8) détermine une impédance du milieu (9) dans le tube de mesure (2) en utilisant des signaux de mesure d'impédance générés par les signaux d'excitation et mesurés au niveau de la première électrode (3) et de la deuxième électrode (4).

11. Procédé selon la revendication 10, dans lequel le débitmètre magnéto-inductif (1) est réalisé selon l'une des revendications 1 à 9.
